# EUROPÄISCHE PATENTANMELDUNG

(11) **EP 1 150 411 A1**
(43) Veröffentlichungstag der Anmeldung: **31.10.2001**
(21) Anmeldenummer: 00108782.4
(22) Anmeldetag: 25.04.2000
(51) Int. Cl.: H02H 3/24, H02H 3/00

(54) **Unterspannungsauslöser**

(71) Anmelder: SIEMENS AKTIENGESELLSCHAFT, 80333 München (DE)
(72) Erfinder: Wolf, Johann, Dr. Dipl.-Ing., 93080 Pentling (DE)

(57) **Zusammenfassung**

Bei einem Unterspannungsauslöser (1) mit einer Auslöseeinrichtung (4), die bei Unterschreiten eines vorgebbaren Spannungsgrenzwertes (U2) einen Auslöseimpuls (P_{A}) zur Betätigung eines Schaltkontaktes (7) ausgibt, sind Mittel zur Einstellung des Spannungs- oder Auslösegrenzwertes (U2) vorgesehen.

## Beschreibung

Die Erfindung bezieht sich auf einen Unterspannungsauslöser mit einer Auslöseeinrichtung, die bei Unterschreiten eines vorgebbaren Spannungsgrenzwertes einen Auslöseimpuls zur Betätigung eines Schaltkontaktes ausgibt.

Ein Unterspannungsauslöser bewirkt das Öffnen oder Schließen eines elektrischen Schalters, beispielsweise eines Leistungsschalters, mit oder ohne Verzögerung, wenn die Spannung an dessen Anschlüssen einen gegebenen Wert unterschreitet. Der Spannungsgrenzwert, bei dessen Unterschreiten das Auslöserelais einen Auslöseimpuls zur Betätigung des elektrischen Schalters oder allgemein eines Schaltkontaktes ausgibt, ist dabei üblicherweise fest eingestellt. Ein derartiger Unterspannungsauslöser, bei dem der Spannungsgrenzwert mittels einer einem Gleichrichter nachgeschalteten Zenerdiode fest eingestellt ist, ist z.B. aus der DE 2 239 654 A1 und aus der DE 39 12 601 A1 bekannt.

Da ein Unterspannungsauslöser in der Regel als Anbaugerät oder Anbaumodul für einen elektrischen Schutzschalter, insbesondere für einen Leitungsschutzschalter ausgeführt ist, müssen in der Praxis für unterschiedliche Anwendungen und darüber hinaus aufgrund vorschriftsgemäß zulässiger Spannungsbereiche verschiedene Auslösertypen mit unterschiedlichen Spannungsgrenzwerten bereitgestellt werden, bei deren Unterschreiten eine Auslösung erfolgen soll. Zusätzlich zu dem damit verbundenen Nachteil der Lagerhaltung aufgrund der erforderlichen Typenvielfalt treten insbesondere beim Zusammenwirken mehrerer Unterspannungsauslöser in einer Anlage häufig äußerst unerwünschte Probleme auf.

Der Erfindung liegt daher die Aufgabe zugrunde, einen Unterspannungsauslöser anzugeben, der unter Vermeidung der genannten Nachteile für verschiedene Anwendungen, insbesondere für unterschiedliche Nennwerte oder Netzspannungen eines zu schaltenden Stromnetzes, einsetzbar ist.

Diese Aufgabe wird erfindungsgemäß gelöst durch die Merkmale des Anspruchs 1. Dazu ist der Unterspannungsauslöser einstellbar ausgeführt, d. h. der Unterspannungsauslöser weist Mittel zur Einstellung des Spannungsgrenzwertes oder der Auslöseschwelle auf. Die Einstellung erfolgt zweckmäßigerweise durch Verändern eines Referenzwertes in Form einer einstellbaren Vergleichsspannung, die mit der zu überwachenden Spannung verglichen wird. Dabei erfolgt eine Auslösung, wenn die zu überwachende Spannung die jeweils eingestellte Vergleichsspannung und damit den Referenz- oder Auslösewert unterschreitet.

Dazu ist in vorteilhafter Ausgestaltung eine Komparatorschaltung vorgesehen, deren Eingängen die zu überwachende Spannung einerseits und die jeweils eingestellte veränderbare Vergleichsspannung zugeführt sind, und deren Ausgang mit einem Eingang einer bistabilen Kippstufe, beispielsweise eines Flipflops oder eines Multivibrators, verbunden ist. Die ausgangsseitig mit der Auslöseeinrichtung in Form beispielsweise eines Auslöserelais verbundene Kippstufe wechselt infolge des sich bei Unterschreiten des eingestellten Auslöse- oder Spannungsgrenzwertes ändernden Ausgangszustands der Komparatorschaltung ebenfalls deren Ausgangszustand, so dass die Auslöseeinrichtung einen Auslöseimpuls zur Betätigung eines mit dem Unterspannungsauslöser verbundenen Schutzschalters ausgibt. Dabei ist die zu überwachende Spannung einem ersten Eingang der Komparatorschaltung zweckmäßigerweise über eine Gleichrichterschaltung zugeführt. Dieser kann zur Reduzierung der an den ersten Eingang der Komparatorschaltung geführten Spannung ein Spannungsteiler nachgeschaltet sein.

Die Einstellung der Vergleichs- oder Referenzspannung kann mittels eines gehäuseseitig vorgesehenen Bedienelementes über einen mit diesem gehäuseintern gekoppelten Spannungsteiler erfolgen. Dabei kann die Einstellung analog, z.B. mittels eines Potentiometers mit oder ohne Raststellungen oder auch in Stufen mittels eines entsprechend ausgestalteten Schalters, z.B. eines sogenannten Dip-Schalters, erfolgen. Auch kann eine digitale Einstellung, z.B. mittels eines Codierschalters, vorgesehen sein. Zweckmäßig ist auch eine Kombination dieser Einstellvarianten, z.B. in Form einer stufenweisen Bereichsvorwahl und einer analogen Einstellung von Zwischenwerten.

Gemäß einer bevorzugten Ausführungsform wird dem zweiten Eingang der Komparatorschaltung die Vergleichs- oder Referenzspannung über einen Buskoppler zugeführt. Dies ermöglicht in besonders vorteilhafter Art und Weise eine Ferneinstellung des Auslöse- oder Spannungsgrenzwertes. Die Busankopplung an den Komparator erfolgt dabei zweckmäßigerweise über einen Analog-Digital-Wandler. Eine derartige Busverbindung kann sowohl über eine externe als auch über eine interne Busankopplung realisiert werden. Besonders vorteilhaft ist dabei die Verwendung eines mit einem gehäuseinternen Busankoppler zusammenwirkenden Druckkontaktsystems zur Kontaktierung auf einer Hut- oder Datenschiene, wie diese bei busgekoppelten Zusatzkomponenten für Niederspannungsschaltgeräte eingesetzt wird. Ein derartiges busgekoppeltes System ist beispielsweise der genormte European Installation Bus (EIB).

Die mit der Erfindung erzielten Vorteile bestehen insbesondere darin, dass mit einem Unterspannungsauslöser, dessen Auslöse- oder Spannungsgrenzwert veränderbar ist und somit bedarfsweise eingestellt werden kann, die Typenvielfalt und somit die Lagerhaltung auf ein Minimum reduziert werden kann. Darüber hinaus kann der gewünschte Auslösewert auch während des Betriebs des Unterspannungsauslösers und insbesondere des damit verbundenen Niederspannungsschaltgerätes auf den vorgesehenen Auslösewert einjustiert werden. Ferner ist ein Abgleich mit anderen Unterspannungsauslösern in einfacher Art und Weise jederzeit möglich.

Eine Ferneinstellung über eine Busankopplung ermöglicht darüber hinaus unabhängig vom jeweiligen Aufstellungsort des entsprechenden Unterspannungsauslösers innerhalb einer komplexen Anlage eine übergeordnete Kontrolle und Nachjustierung des bei dem jeweiligen Unterspannungsauslöser eingestellten Auslöse- oder Spannungsgrenzwertes.

Nachfolgend werden Ausführungsbeispiele der Erfindung anhand einer Zeichnung näher erläutert. Darin zeigen:
- FIG 1: schematisch einen mit einem Schutzschalter zusammenwirkenden Unterspannungsauslöser mit einer Schaltung zur Einstellung eines Auslösergrenzwertes,
- FIG 2: einen einstellbaren Unterspannungsauslöser gemäß FIG 1 mit einer Busankopplung und einem mit einem einzelnen Schaltkontakt zusammenwirkenden Auslöserrelais,
- FIG 3: ein Gehäuse eines Unterspannungsauslösers gemäß FIG 1 mit einem frontseitig zugänglichen Betätigungselement mit klappbarer Abdeckung,
- FIG 4: ein Gehäuse gemäß FIG 3 mit einer schiebbaren Abdeckung,
- FIG 5: ein Gehäuse eines Unterspannungsauslösers gemäß FIG 1 mit einem im Einbauzustand unzugänglichen Betätigungselement, und
- FIG 6: ein Gehäuse für einen Unterspannungsauslöser gemäß FIG 2 mit einem Kontaktsystem zur Busankopplung.

Einander entsprechende Teile sind in allen Figuren mit den gleichen Bezugszeichen versehen.

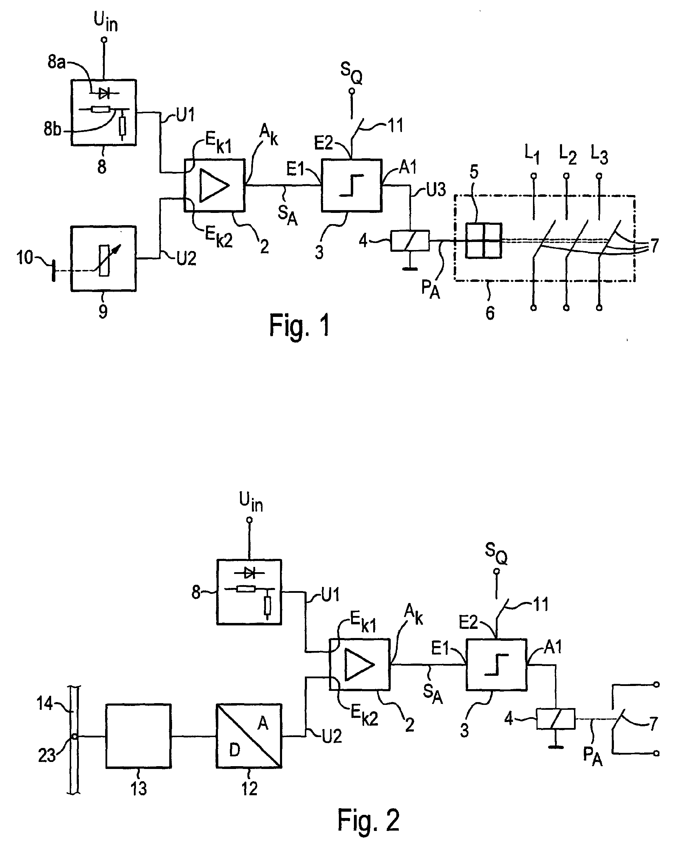

Der in FIG 1 dargestellte Unterspannungsauslöser 1 umfasst einen Operationsverstärker in Komparatorschaltung 2 und eine dieser nachgeschalteten Kippstufe 3, die ausgangsseitig mit einer Auslöseeinrichtung in Form eines Auslöserelais 4 verbunden ist. Das Auslöserelais 4 ist mechanisch mit einem Schaltschloss 5 eines elektrischen Schutzschalters 6, z. B. Leitungsschutzschalters gekoppelt, dessen Schaltkontakte 7 in die Phasenleitungen L1,L2,L3 eines Strom- oder Versorgungsnetzes geschaltet sind.

Ein erster Eingang Eₖ₁ der Komparatorschaltung 2 ist mit einer Eingangsstufe 8 verbunden, der eingangsseitig die zu überwachende Spannung Uᵢₙ zugeführt ist. Die Eingangsstufe 8 umfasst eine durch eine Diode symbolisierte Gleichrichterschaltung 8a und eine durch ohmsche Widerstände symbolisierte Spannungsteilerschaltung 8b. Der zweite Eingang Eₖ₂ der Komparatorschaltung 2 ist mit einer weiteren Eingangsstufe 9 verbunden, die einen manuell veränderbaren Spannungsteiler in Form beispielsweise eines mittels eines Bedienelementes 10 betätigbaren Potentiometers, eines Codierschalters oder eines Dip-Schalters aufweist.

In der Eingangsstufe 8 wird die zu überwachende Spannung Uᵢₙ mittels der Gleichrichterschaltung 8a gleichgerichtet. Die gleichgerichtete und ggf. mittels der Spannungsteilerschaltung 8b reduzierte Spannung Uᵢₙ wird als Eingangsspannung U1 dem ersten Eingang Eₖ₁ der Komparatorschaltung 2 zugeführt. Dem zweiten Eingang Eₖ₂ der Komparatorschaltung 2 wird eine Referenz- oder Vergleichsspannung U2 zugeführt, die mittels des Spannungsteilers der zweiten Eingangsstufe 9 durch manuelle Betätigung des Bedienelementes 10 bedarfsweise eingestellt ist.

Der Einstellbereich für die Vergleichsspannung U2 deckt dabei zweckmäßigerweise alle oder zumindest eine Vielzahl von durch einen derartigen Unterspannungsauslöser 1 zu repräsentierende Auslöse- oder Unterspannungsgrenzwerten ab. Die zur Generierung der Referenz- oder Vergleichsspannung U2 vorgesehene Spannungsversorgung der zweiten Eingangsstufe 9 erfolgt dabei in nicht näher dargestellter Art und Weise bevorzugt aus der Versorgungsspannung einer bei einem derartigen Unterspannungsauslöser 1 üblicherweise vorgesehenen Elektronik.

Die Komparatorschaltung 2 liefert über dessen Ausgang Aₖ ein Auslöse- oder Zustandssignal S_{A}, das der z.B. als bistabiler Multivibrator oder als Flipflop ausgeführten Kippstufe 3 über deren Eingang E1 als Eingangssignal zugeführt ist.

Im Normalbetrieb ohne Unterspannung weist die Kippstufe 3 an deren Ausgang A1 einen ersten Signalzustand auf. Bei diesem Signalzustand der Kippstufe 3 liegt am Auslöserelais 4, d.h. an dessen Relaisspule eine Spannung U3 an. Sinkt im Falle einer Unterspannung die zu überwachende Spannung Uᵢₙ und demzufolge die Spannung U1 am ersten Eingang Eₖ₁ der Komparatorschaltung 2 unter den in der zweiten Eingangsstufe 9 eingestellten Referenzwert und damit unter die Vergleichsspannung U2 am zweiten Eingang Eₖ₂ der Komparatorschaltung 2 ab, so wechselt die Kippstufe 3 deren Signalzustand am Ausgang A1 infolge einer entsprechenden Änderung des Zustandssignals S_{A} der Komparatorschaltung 2.

Ist dabei der Signalzustand der Kippstufe 3 im Normalbetrieb z. B. high, so wechselt dieser Signalzustand bei Absinken der Eingangsspannung U1 an der Komparatorschaltung 2 unter die Vergleichsspannung U2 auf low, so dass das Auslöserelais 4 aufgrund der fehlenden Spannung U3 einen Auslöseimpuls P_{A} ausgibt. Mittels des Auslöseimpulses P_{A} wird das Schaltschloss 5 des Schutzschalters 6 betätigt, so dass dessen Schaltkontakte betätigt werden. Anstelle der Betätigung des Schutzschalters oder Leistungsschalters 6 kann der Auslöseimpuls P_{A} des Auslöserelais 4 auch zu einem anderen Zweck weitergegeben werden, beispielsweise über einen Arbeitsstromauslöser an einen einzelnen Schaltkontakt. Dies ist in FIG 2 angedeutet.

Da die Kippstufe 3 zweckmäßigerweise bistabil ausgeführt ist, bleibt der infolge eines Unterschreitens der Vergleichsspannung U2 eingestellte Signalzustand am Ausgang A1 der Kippstufe 3 auch nach einem erneuten Anstieg der zu überwachenden Spannung Uᵢₙ und damit der Eingangsspannung U1 auf deren dem Normalbetrieb ohne Unterspannung entsprechenden Spannungswert erhalten, bis mittels eines Qittierungsschalters 11 ein entsprechendes Quittierungssignal S_{Q} an einen zweiten Eingang E2 der Kippstufe 3 geführt wird. Infolge des Quittierungssignals S_{Q} wechselt die Kippstufe 3 in deren vorherigen stabilen Signalzustand, so dass am Ausgang A1 wiederum der high-Pegel ansteht und die Spannung U3 am Auslöserelais 4 ansteht. Das elektromagnetische Auslöserelais 4 zieht demzufolge dessen Anker in die Ausgangsposition zurück, so dass der Auslöseimpuls P_{A} aufgehoben ist.

Bei dem in FIG 2 dargestellten einstellbaren Unterspannungsauslöser 1 ist der zweite Eingang Eₖ₂ der Komparatorschaltung 2 über einen Analog-Digital-Wandler 12 an einen Buskoppler 13 geführt, der eingangsseitig mit einem Installationsbus 14 kontaktiert ist. Die Einstellung oder Veränderung der Vergleichsspannung U2 erfolgt hier vorteilhafterweise durch eine Ferneinstellung über den Installationsbus 14 und den Buskoppler 13. Dazu wird ein entsprechendes, vom Busankoppler 13 geliefertes digitales Steuersignal S_{D} mittels des Digital-Analog-Wandlers 12 in die analoge Vergleichsspannung U2 umgewandelt. Durch Integration eines entsprechenden Prozessors in den Busankoppler 13 kann dieser auch direkt die analoge Vergleichsspannung U2 ausgeben. Auch können sowohl die aus der zu überwachenden Spannung Uᵢₙ abgeleitete Eingangsspannung U1 als auch die Vergleichsspannung U2 als digitale Werte den Eingängen Eₖ₁ bzw. Eₖ₂ der Komparatorschaltung 2 zugeführt sein.

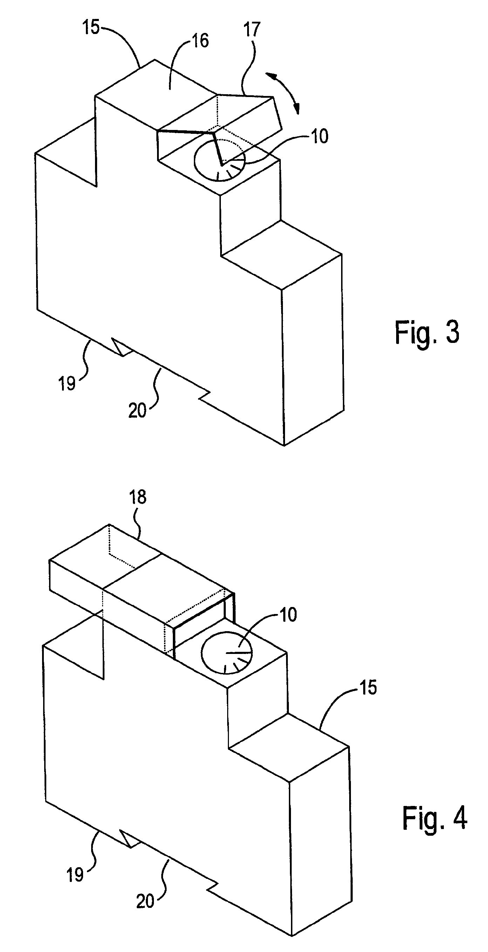

Die manuelle Einstellung der Vergleichs- oder Referenzspannung U2 und damit des Spannungsgrenzwertes des einstellbaren Unterspannungsauslösers 1 gemäß FIG 1 erfolgt mittels des Bedienelementes 10, das bei einem in den Figuren 3 und 4 dargestellten Gehäuse 15 eines derartigen Unterspannungsauslösers 1 auf einer auch im Montagezustand zugänglichen Gehäusefrontseite 16 angeordnet ist. Das Bedienelement 10 kann in Form eines Drehschalters, Dip-Schalters, Codierschalters oder dgl. ausgeführt sein. Mittels des Bedienelements 10, das in nicht näher dargestellter Art und Weise gehäuseintern mit dem Spannungsteiler der zweiten Einstellstufe 9 gekoppelt oder verbunden ist, wird die Vergleichsspannung U2 und damit die Höhe der Ansprechschwelle des Unterspannungsauslösers 1 eingestellt oder verändert. Um dabei eine unerwünschte Änderung der Einstellung der Vergleichsspannung U2 und damit des Auslöse- oder Spannungsgrenzwertes zu verhindern, ist das Bedienelement 10 zweckmäßigerweise mittels einer durchsichtigen Abdeckklappe 17 (FIG 3) oder eines ebenfalls durchsichtigen Abdeckschiebers 18 (FIG 4) verschließbar.

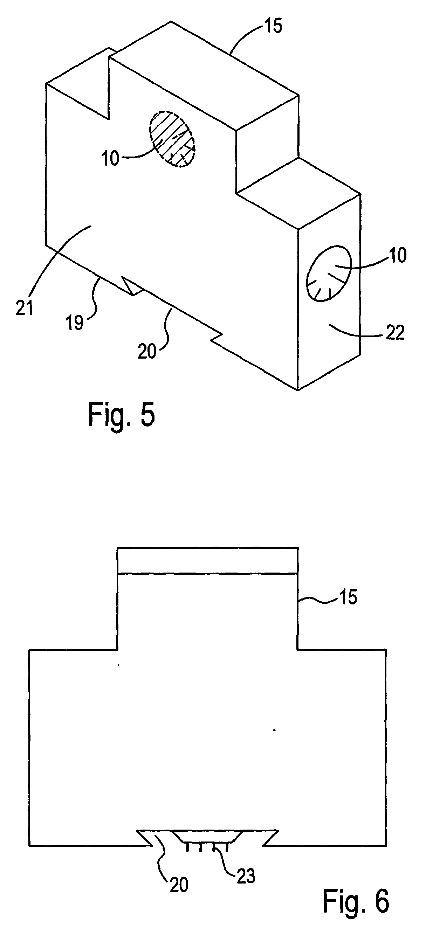

Ebenso wie das Gehäuse 15 gemäß den Figuren 3 und 4 ist auch das in FIG 5 dargestellte Gehäuse für einen manuell einstellbaren Unterspannungsauslöser 1 auf der Gehäuseunterseite 19 mit einer schwalbenschwanzartigen Ausnehmung 20 versehen, so dass das Gehäuse 15 nach Art eines Reiheneinbaugerätes auf eine normierte Hutschiene aufsetzbar ist.

Bei der Ausführungsform nach FIG 5 ist das Bedienelement 10 an einer Gehäuselängsseite 21 oder an einer Gehäusestirnseite 22 angeordnet. Im Falle eines Verteilereinbaus des Unterspannungsauslösers 1 in einen Geräteverbund mit mehreren aneinandergereihten Niederspannungsschaltgeräten ist somit das Bedienelement 10 von außen nicht mehr zugänglich. Die manuelle Einstellung der Vergleichsspannung U2 und damit des Auslöse- oder Spannungsgrenzwertes des einstellbaren Unterspannungsauslösers 1 erfolgt dann vor dem Einsetzen dessen Gehäuses 15 in den Geräteverbund oder bevor ein diesem Unterspannungsauslöser 1 benachbartes Reiheneinbaugerät auf eine derartige Hutschiene aufgesetzt und die das Bedienelement 10 aufweisende Gehäuseseite 21 abgedeckt wird.

FIG 6 zeigt eine bevorzugte Ausführungsform des Gehäuses 15 eines fernbedienbar über den Busankoppler 13 einzustellenden Unterspannungsauslösers 1 gemäß FIG 2. Bei dieser Variante sind keine äußeren Einstellmittel in Form manuell betätigbarer Bedienelemente vorgesehen. Die Vergleichsspannung U2 und damit die Ansprechschwelle des einstellbaren Unterspannungsauslösers 1 wird über den Installationsbus 14 vorgenommen, mit dem der Busankoppler 13 des Unterspannungsauslösers 1 gehäuseintern über ein im Bereich der Aussparung 20 des Gehäuses 15 vorgesehenes Druckkompaktsystem 23 verbunden ist. Diese Ausführungsform eignet sich daher besonders zur Einbindung des einstellbaren Unterspannungsauslösers 1 in das EIB-System.

## Patentansprüche

1. Unterspannungsauslöser mit einer Auslöseeinrichtung (4), die bei Unterschreiten eines vorgebbaren Spannungsgrenzwertes (U2) einen Auslöseimpuls (P_{A}) zur Betätigung eines Schaltkontaktes (7) ausgibt,
**dadurch gekennzeichnet, dass** Mittel zur Einstellung des Spannungsgrenzwertes (U2) vorgesehen sind.

2. Unterspannungsauslöser nach Anspruch 1,
**dadurch gekennzeichnet, dass** der Spannungsgrenzwert eine einer Komparatorschaltung (2) zugeführte veränderbare Vergleichsspannung (U2) ist, wobei die Komparatorschaltung (2) bei einer Abweichung einer zu überwachenden Spannung (Uᵢₙ) von der Vergleichspannung (U2) ein Zustandssignal (S_{A}) zur Erzeugung des Auslöseimpulses (P_{A}) abgibt.

3. Unterspannungsauslöser nach Anspruch 2,
**dadurch gekennzeichnet, dass** der Komparatorschaltung (2) eine ausgangsseitig mit der Auslöseeinrichtung (4) verbundene bistabile Kippstufe (3) nachgeschaltet ist.

4. Unterspannungsauslöser nach Anspruch 2 oder 3,
**dadurch gekennzeichnet, dass** die zu überwachende Spannung (Uᵢₙ) einem ersten Eingang (Eₖ₁) der Komparatorschaltung (2) über eine Gleichrichterschaltung (8a) zugeführt ist.

5. Unterspannungsauslöser nach Anspruch 4,
**dadurch gekennzeichnet, dass** die zu überwachende gleichgerichtete Spannung (U1) dem ersten Eingang (Eₖ₁) der Komparatorschaltung (2) über eine Spannungsteilerschaltung (8b) zugeführt ist.

6. Unterspannungsauslöser nach einem der Ansprüche 2 bis 5,
**dadurch gekennzeichnet, dass** einem zweiten Eingang (Eₖ₂) der Komparatorschaltung (2) die Vergleichsspannung (U2) über einen Buskoppler (13) zugeführt ist.

7. Unterspannungsauslöser nach Anspruch 6,
**dadurch gekennzeichnet, dass** dem Buskoppler (13) ein Analog-Digital-Wandler (12) nachgeschaltet ist.

8. Unterspannungsauslöser nach einem der Ansprüche 1 bis 7, **gekennzeichnet durch** ein Gehäuse (15) mit einem Betätigungselement (10) zur manuellen Einstellung der Vergleichsspannung (U2).

9. Unterspannungsauslöser nach Anspruch 6 oder 7,
**gekennzeichnet durch** ein Gehäuse (15) mit einem mit dem Buskoppler (13) verbundenen Kontaktsystem (23) zur Ankopplung an einen Installationsbus (14).

10. Unterspannungsauslöser nach einem der Ansprüche 1 bis 9 als Anbaumodul für ein Niederspannungsschaltgerät, insbesondere für einen Leitungsschutzschalter (6).
